(19) Europäisches Patentamt
European Patent Office
Office européen des brevets

(11) EP 1 299 477 B1

(12) # FASCICULE DE BREVET EUROPEEN

(45) Date de publication et mention de la délivrance du brevet:
**21.11.2007 Bulletin 2007/47**

(21) Numéro de dépôt: **01951759.8**

(22) Date de dépôt: **03.07.2001**

(51) Int Cl.:
***C08L 77/00*** (2006.01) ***C08L 77/02*** (2006.01)
***C08L 77/06*** (2006.01)

(86) Numéro de dépôt international:
**PCT/FR2001/002128**

(87) Numéro de publication internationale:
**WO 2002/002696 (10.01.2002 Gazette 2002/02)**

(54) **COMPOSITIONS POLYAMIDES A ANTISTATICITE ET HYDROPHILIE AMELIOREES**

POLYAMID-ZUSAMMENSETZUNGEN MIT VERBESSERTEN ANTISTATISCHEN UND HYDROPHILEN EIGENSCHAFTEN

POLYAMIDE COMPOSITIONS WITH IMPROVED ANTISTATIC AND HYDROPHILIC PROPERTIES

(84) Etats contractants désignés:
**AT BE CH CY DE DK ES FI FR GB GR IE IT LI LU MC NL PT SE TR**

(30) Priorité: **03.07.2000 FR 0008632**

(43) Date de publication de la demande:
**09.04.2003 Bulletin 2003/15**

(73) Titulaires:
- **Rhodia Performance Fibres
62053 Saint Laurent Blangy Cedex (FR)**
- **Bianchi, Jean-Pierre
07800 Charmes sur Rhone (FR)**
- **Bordes, Bertrand
69006 Lyon (FR)**
- **Chaubet, Olivier
26000 Valence (FR)**
- **Rochat, Sandrine
69100 Villeurbanne (FR)**
- **Roche, Eric
38200 Luzinay (FR)**

(72) Inventeurs:
- **BIANCHI, Jean-Pierre
F-07800 CHARMES sur RHONE (FR)**
- **BORDES, Bertrand
F-69006 Lyon (FR)**
- **CHAUBET, Olivier
F-26000 VALENCE (FR)**
- **ROCHAT, Sandrine
F-69100 VILLEURBANNE (FR)**
- **ROCHE, Eric
F-38200 LUZINAY (FR)**

(74) Mandataire: **Esson, Jean-Pierre
Rhodia Services,
Direction de la Propriété Industrielle,
Centre de Recherches de Lyon
BP 62
85, avenue des Frères Perret
69192 Saint-Fons Cédex (FR)**

(56) Documents cités:
**EP-A- 0 861 875** **DE-A- 19 745 701**
**FR-A- 2 019 408** **US-A- 5 321 099**

Remarques:
Le dossier contient des informations techniques présentées postérieurement au dépôt de la demande et ne figurant pas dans le présent fascicule.

EP 1 299 477 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

## Description

La présente invention concerne des compositions polyamides à antistaticité et/ou hydrophilie améliorées. Ces compositions sont particulièrement adaptées pour la fabrication de fils, fibres et filaments à base de polyamide.

Dans les domaines de la formulation des matériaux synthétiques on cherche souvent à modifier les propriétés d'antistaticité et/ou d'hydrophilie, afin de conférer une meilleure travaillabilité dudit matériau, un meilleur confort d'utilisation du produit final, ou une adaptation au milieu extérieur.

Dans le domaine des fils textiles on cherche par exemple à améliorer l'hydrophilie du polyamide, afin de rapprocher ses propriétés de celles du coton et d'apporter un meilleur confort.

Dans le domaine des fils, fibres et filaments, l'antistaticité peut être nécessaire pour des raisons de confort d'utilisation. Elle permet entre autres d'éviter l'accumulation de charges électriques. Un des effets peut être par exemple de limiter l'accumulation de poussière sur des surfaces flockées. De plus, l'utilisation d'une fibre intrinsèquement antistatique peut permettre d'éviter l'emploi, parmi les fibres utilisées pour réaliser la surface flockée, d'une fibre fortement conductrice présentant le plus souvent une forte coloration. On peut alors espérer des teintes plus claires et des couleurs moins grises.

Pour améliorer l'antistaticité ou l'hydrophilie du polyamide ou de composition à base de polyamide, il est connu d'utiliser des motifs polyéther. De très nombreux documents décrivent différents modes d'introduction de tels motifs dans le polyamide, par exemple sous forme de mélanges de polymères ou de copolymères, ou en association avec le polyamide par exemple sous forme de fibres bi-composantes.

Le document "hydrophilic nylon for improved apparel comfort", Textile Research Journal, juin 1985, page 325-333, décrit la fabrication et les propriétés d'un copolymère obtenu par polycondensation de caprolactame et de polyoxydes d'éthylène à terminaisons amines. Le copolymère est filé en fondu pour la fabrication de fils. Les fils présentent une hydrophilie améliorée par rapport à un polyamide classique. Cette méthode nécessite toutefois la fabrication de copolymères spéciaux, et implique donc une adaptation des procédés de polymérisation.

On peut préférer modifier les propriétés du polyamide par ajout d'un agent en phase fondue. Dans le cadre de la fabrication d'articles filés, l'agent peut par exemple être ajouté en fondu avant le filage.

A cette fin, il est connu d'introduire du polyéthylène glycol dans le polyamide. Ce composé, soluble dans l'eau, est toutefois fortement extrait des compositions au contact de l'eau. Son effet ne perdure pas après quelques lavages.

On connaît également des compostions obtenues par ajout au polyamide de copolymères statistiques obtenus à partir de caprolactame et de polyoxydes d'éthylène à terminaisons amines. Ces compositions présentent une perte de propriétés après lavage encore relativement importante.

La présente invention a pour objet de proposer des compositions, notamment filables en fondues, nouvelles, qui ne présentent pas les inconvénients mentionnés ci-dessus. Les compositions selon l'invention présentent aussi notamment une coloration satisfaisante, c'est-à-dire suffisamment faible.

A cet effet, l'invention propose une composition polymère thermoplastique comprenant un polyamide et au moins un composé modificateur de l'hydrophilie et/ou de l'antistaticité, caractérisé en ce que le composé est un polymère bloc représenté par la formule (1):

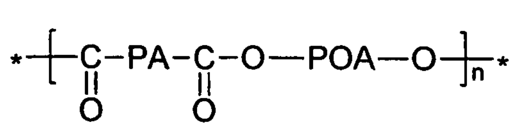

(I)

dans laquelle,

- n est un entier compris entre 3 et 50
- POA représente un bloc polyoxyde d'alkylène
- PA représente un bloc polyamide dont le motif de répétition est représenté par l'une des formules (IIa) ou (IIb):

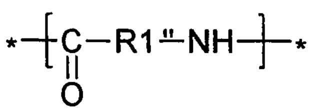

(IIa)

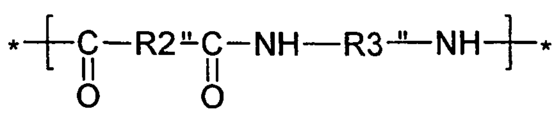

(IIb)

dans lesquelles

R1, R2, R3 sont des radicaux aromatiques ou aliphatiques comprenant 4 à 36 atomes de carbone.

Le copolymère bloc représenté par la formule (1) est un polyétherblocamide, ou un polyétheresteramide. De tels composés sont notamment commercialisés par la société Atofina sous la dénomination de PEBAX®. Ils comportent des blocs polyamide, et des blocs polyalkylène glycol. Le nombre de blocs de chaque nature est compris entre 3 et 50. Il est de préférence compris entre 10 et 15. Le nombre de blocs est représenté par l'entier n dans la formule (I).
Les blocs polyamides peuvent être représentés par l'une des formule (IIa) ou (IIb) représentées ci-dessus. Les blocs de formule (IIa) sont des polyamides du type de ceux obtenus par polymérisation à partir de lactames et/ou d'aminoacides. Les procédés de polymérisation de tels composés sont connus : on cite entre autre la polymérisation anionique, la polycondensation en fondu, par exemple dans un tube VK.
Les blocs (IIb) sont du type de ceux obtenus par polycondensation de diacides carboxyliques sur des amines.
Les radicaux $R_1$, $R_2$, $R_3$ sont des radicaux aromatiques ou aliphatiques comprenant 4 à 36 atomes de carbones.
Selon le mode de réalisation où le bloc polyamide est représenté par la formule (IIa), le radical R1 est avantageusement choisi parmi les radicaux suivants :

- le radical pentyle divalent non ramifié, le bloc polyamide est alors un bloc polyamide 6,
- le radical décyle (10 atomes de carbone) divalent non ramifié, le bloc polyamide est alors un bloc polyamide 11,
- le radical undécyle (11 atomes de carbone) divalent non ramifié, le bloc polyamide est alors un bloc polyamide 12.

Selon le mode de réalisation où le bloc polyamide est représenté par la formule (IIb), les couples de radicaux $R_2$ et $R_3$ sont avantageusement parmi les couples suivants :

- $R_2$ = radical butyle linéaire divalent, $R_3$ =radical hexyle linéaire divalent, bloc polyamide 66,
- $R_2$ = radical butyle linéaire divalent, $R_3$ = radical butyle linéaire divalent, bloc polyamide 4-6
- $R_2$ = radical octyle linéaire divalent, $R_3$ = radical hexyle linéaire divalent, bloc polyamide 6-10.

Le bloc polyoxyde d'alkylène peut être choisi parmi les blocs polyoxyde d'éthylène, polytriméthylène oxide, polytetraméthylène oxyde. Dans le cas où le bloc est à base de polyoxyde d'éthylène, il peut comporter aux extrémités du bloc des motifs propylène glycol.
Les masses moléculaires moyennes de chacun des blocs sont indépendantes l'une de l'autre. On préfère toutefois qu'elles soient proche l'une de l'autre.
La masse moléculaire moyenne des blocs POA est de préférence comprise entre 1000 et 3000 g/mol. La masse moléculaire moyenne des blocs PA est avantageusement comprise entre 1000 et 3000 g/mol.
Le composé de formule (1) peut être obtenu par réaction catalysée entre des chaînes macromoléculaires polyamides dont les fonctions terminales sont des fonctions acides carboxyliques, et des chaînes polyéther diols, c'est-à-dire des chaînes macromoléculaires polyoxyde d'alkylène dont les fonctions terminales sont des fonctions alcool. Il s'agit par exemple de chaînes polyéthylène glycol à terminaisons alcools.
La réaction entre les fonctions terminales des blocs peut être catalysée par des tétraalkylorthotitanates ou de l'acétate de zirconyle.
Les compositions de l'invention peuvent comprendre plusieurs composés modificateurs de natures différentes, par exemple deux composés de nature différente.
Pour la mise en oeuvre de l'invention, on préfère utiliser des composés de formule (1) dont la couleur est la moins marquée possible. On préfère à ce titre utiliser des composés dont l'indice de jaune est faible. Le catalyseur utilisé pour l'obtention du composé peut avoir une influence sur sa couleur. On préfère à ce titre les catalyseurs mentionnés ci-dessus. La couleur du composé utilisé influe sur la couleur de la composition obtenue. Les caractéristiques de couleur sont très critiques dans certains domaines d'application, par exemple dans les domaines textiles.
Selon un mode particulier de réalisation de l'invention, les composés modificateurs de formule (I) ont une température de fusion supérieure à 150°C, de préférence comprise entre 150 et 250°C.
Les compositions selon l'invention sont obtenues par mélange en phase fondue du polyamide et du composé modificateur de l'hydrophilie et/ou de l'antistaticité. Le mélange peut par exemple être réalisé à l'aide d'un dispositif d'extrusion, par exemple un dispositif simple vis ou double vis.
La proportion pondérale de composé modificateur dans la composition est de préférence comprise entre 4 et 20 %.
Les compositions selon l'invention présentent une morphologie selon laquelle des inclusions du composé modificateur sont dispersées dans une phase continue de polyamide.
Les compositions, outre le modificateur, peuvent comporter d'autres additifs tels que des agents matifiants, des pigments colorés, des agents de stabilisation chaleur ou lumière, des agents de protection chaleur, des agents antimicrobiens, des agents antisalissure. Cette liste n'a aucun caractère exhaustif.

Les compositions peuvent en particulier contenir un agent matifiant constitué de particules de dioxyde de titane, éventuellement enrobées afin de protéger le polymère de dégradations à leur contact. Le dioxyde de titane peut être utilisé seul ou en association avec d'autres agents matifiants. La proportion pondérale d'agent matifiant dans les compositions peut atteindre quelques pour cents. Elle est par exemple comprise entre 0,2 et 0,5% pour un effet dit "mi-mat" , entre 0,5 et 1% pour un effet dit « mat » et entre 1 % et 2 % pour un effet dit "grand-mat". Pour obtenir une matité considérée comme importante, la concentration pondérale est généralement supérieure à 0,7%.

On peut aussi utiliser des particules de sulfure de zinc à titre d'agent matifiant, ou bien un mélange dioxyde de titane/ sulfure de zinc.

Le polyamide de la composition peut être choisi parmi les polyamide 6, le polyamide 66, le polyamide 4-6, le polyamide 6-10, le polyamide 11, le polyamide 12, les mélanges et copolymères à base de ces polymères.

L'invention concerne également les fils, fibres et filaments obtenus par filage d'une composition précédemment décrite. Il peut s'agir de fils textiles continus destinés à être tissés ou tricotés, de fils BCF utilisés pour la fabrication de moquettes, de câbles flock destinés à être coupés en fibres très courtes pour flockage, de fibres utilisés pour la réalisation de filés de fibres, ou de surfaces non tissées.

Les compositions sont filées en fondu par extrusion à travers des filières. Le mélange du polyamide et du composé modificateur de l'hydrophilie et/ou de l'antistaticité peut être réalisé au cours d'une opération spécifique avant le filage, la composition étant solidifiée par exemple sous forme de granulés puis fondue pour être filée. Il peut également être réalisé juste avant le filage, par introduction dans le dispositif de filage d'une part du polyamide, d'autre part du modificateur.

Les procédés de filage sont connus. Brièvement ils consistent à extruder le matériau fondu à travers une filière et à refroidir les filaments obtenus. Les filaments sont généralement convergés sous la filière et rassemblés afin de subir des traitements tels que des étirages, texturation, ensimage, relaxation, teinture, fixations thermiques. Cette liste n'a pas un caractère exhaustif. Les traitements peuvent être effectués sur un nombre relativement restreint de filaments, pour la fabrication de fils par exemple, ou sur un nombre important de filaments, réunis sous forme de câble, de nappe ou de mèche, pour la fabrication de fibres par exemple, ou de câble flock.

Les fils et filaments selon l'invention peuvent être compris dans une large gamme de titre, pouvant aller de titres inférieurs à 0,5 dtex à des titres supérieurs à 500 dtex.

Les fibres et filaments peuvent avoir des formes de section variées telles que des sections rondes ou multilobées. La section peut également comprendre des creux. Ils sont généralement obtenus à partir d'une seule matière. Toutefois, ils peuvent également être obtenus à partir de deux matières ou plus. Ces fibres ou filaments sont appelées fibres ou filaments composites ou bi-composants du type " side by side " ou " coeur / peau ".

Les fils fibres et filaments obtenus à partir de la composition présentent une hydrophilie et/ou une antistaticité accrue par rapport à celle du polyamide, avec une bonne conservation de ces propriétés après teinture ou lavage.

Les compositions selon l'invention peuvent être utilisées pour la réalisation de surfaces flockées. Les fibres flockées sont dans ce cadre constituées soit exclusivement de fibres de composition selon l'invention, soit partiellement, en association à d'autres fibres.

La technique de flockage est connue. Brièvement, elle consiste à projeter des fibres de longueur très courte sur une surface enduite d'une colle, afin que les fibres restent sur la surface. On flocke ainsi par exemple des objets, des fils, des surfaces textiles. La longueur des fibres est généralement inférieure à 10 mm, elle est préférablement comprise entre 0,2 et 3mm. Elles sont le plus souvent teintes après la coupe et avant projection, mais il est possible de teindre la surface après projection, ou d'utiliser des fibres comprenant des pigments de couleur (fibres teint masse). Pour projeter les fibres, on utilise un champ électrostatique, les fibres étant préalablement activées. L'opération d'activation consiste à conférer aux fibres une charge électrique. Le flockage peut être réalisé par battage du support, par voie électrostatique, ou bien par conjonction des deux. Par exemple, pour un flockage électrostatique, la fibre doit être conductrice de charges afin d'être orientée et projetée dans le champ électrostatique. La charge est conférée par un traitement d'activation. On trouve deux grandes familles de traitements d'activation : les traitements à base de tannins naturels et ceux à base de silice colloïdale. Dans tous les cas, il s'agit de traitements de surface non permanents qui favorisent une reprise en eau importante.

Dans certains cas, selon le procédé d'activation utilisé, l'activation est facilitée par rapport à des fibres ne comprenant pas le modificateur. Le modificateur peut donc permettre d'éviter tout ou partie du traitement d'activation.

Les surfaces flockées par des fibres selon l'invention permettent d'obtenir un bon écoulement des charges électriques sans nécessiter d'adjonction de fibres fortement conductrices de couleur différente de celle des fibres recouvrant l'essentiel de la surface. Les surfaces flockées de la sorte attirent également beaucoup moins de poussière que les surfaces obtenues avec des fibres classiques en polyamide.

D'autres détails ou avantages de l'invention apparaîtront plus clairement au vu des exemples donnés ci-dessous uniquement à titre indicatif.

Exemples 1 à 5

Matières utilisées :

| | |
|---|---|
| Polyamide : | Polyamide 66 comprenant 0,3 % en poids de particules de dioxyde de titane, de viscosité relative de 41 (mesurée à 8,4% de polymère dans l'acide formique à 90%) |
| Additif A : | PEBAX® MH1657 commercialisé par la société ATOFINA. Polymère bloc multisegmenté comprenant 50% en poids de blocs polyamide 6 et 50% en poids de blocs polyethylène glycol; dont la masse moléculaire moyenne de chaque bloc est d'environ 1500 g/mol. Point de fusion : 204˚C selon ASTM D3418 |
| Additif B : | A7220 additif commercialisé par la société BASF additif dérivé de la famille des tétronics. |
| Additif C : | Polyéthylène glycol de masse moléculaire moyenne 35000 g/mol. |

On prépare des granulés comportant le polyamide et un des additifs par extrusion en extrudeuse double vis avec alimentation en granulés de chacun des additifs. Les compositions ainsi réalisées sont données en tableau I.

TABLEAU I

| | Exemple 1 | Exemple 2 | Exemple 3 comparatif | Exemple 4 comparatif | Exemple 5 comparatif |
|---|---|---|---|---|---|
| Polyamide (% en poids) | 95 % | 90 % | 100 % | 95 % | 95 % |
| Additif (% en poids) | A-5 % | A-10% | - | C-5 % | B-5% |

On file en fondu des fils à partir des granulés préparés. Le filage est suivi d'un étirage entre un 1er godet et un godet intermédiaire, sans reprise du fil. La température du filage est de 275˚C, la vitesse au 1er godet d'appel est de 400 m/min, la vitesse au godet intermédiaire est de 1200 m/min, la vitesse du bobinoir est de 1200 m/min. Le fil est ensimé avec le composé BK2170 commercialisé par la société Henkel. Le fil préparé a un titre de 130 dtex pour 20 filaments.

Les filaments issus de plusieurs bobines sont assemblés entre eux jusqu'à former un câble d'environ 700ktex. A l'aide d'une coupeuse de type guillotine, le câble est coupé en fibres de longueur moyenne 2mm, à la vitesse de 200 coups/min.

L'antistaticité de ces fibres, correspondant à du flock brut de coupe, est mesurée à l'aide d'un appareil « Mahlo tester » à 2 électrodes circulaires, les fibres étant au préalable conditionnées à une humidité relative de 60% à 20˚C. La correspondances entre l'échelle mahlo et la conductivité en Ω.cm est la suivante est donnée en tableau II:

Tableau II

| Conductivité Mahlo | 0 | 10 | 30 | 70 |
|---|---|---|---|---|
| Conductivité approchée [Ω.cm] | $10^{14}$ | $10^{11}$ | $10^{10}$ | $10^{8}$ |

L'antistaticité est mesurée avant, et après 2 lavages. Le lavage est effectué par immersion durant 30 min des fibres dans un bain d'eau déminéralisée, à 95˚C. Le rapport du bain (poids de fibres sur poids d'eau) est de 1/25. Cette opération est répétée deux fois. L'opération de lavage simule les traitements que peut avoir à subir le produit : teinture, lavage.

La reprise d'humidité est mesurée par pesée. Les fibres sont conditionnées à une humidité relative RH=95% et à une température de 30˚C dans une enceinte climatique, durant 24 heures. Leur masse humide est alors mesurée. Elles sont ensuite passées dans une étuve sous vide à 80˚C durant 16h, leur masse sèche est alors mesurée. La reprise d'humidité est ensuite calculée:

**reprise d'humidité= (mase humide – masse sèche) / masse sèche.**

La perte en gain d'absorption d'humidité par rapport au polyamide 66 seul (exemple 3), au lavage, est également

calculée :

Perte en gain d'absorption d'humidité=(gain d'absorption d'humidité par rapport au polyamide 66 seul en % avant lavages - gain d'absorption d'humidité par rapport au polyamide 66 seul en % après lavages) / gain d'absorption d'humidité par rapport au polyamide 66 seul en % avant lavages

Les résultats sont présentés dans le tableau III.

TABLEAU III

| Exemples | 1 | 2 | 3 | 4 | 5 |
|---|---|---|---|---|---|
| Antistaticité avant lavage (Mahlo) | 20 | 30 | 5 | 15 | 25 |
| Antistaticité après lavage (Mahlo) | 15 | 25 | 0 | 5 | 15 |
| Perte d'antistaticité au lavage | 25 % | 16 % | - | 66 % | 40 % |
| Absorption d'humidité avant lavages (% massique) | 6,7 - | 7,5 | 6,2 | 7,5 | 7,2 |
| Absorption d'humidité après lavages (% massique) | 6,7 | 7,5 | 6,2 | 6,2 | 6,5 |
| Perte de gain d'absorption d'humidité au lavage | 0% | 0% | - | 100% | 70% |

Les fibres obtenues à partir de compositions selon l'invention présentent une forte antistaticité et une bonne hydrophilie, avec une forte rémanence de ces caractéristiques après lavage.

Exemples 6 à 10

Des fibres obtenues selon les exemples précédents sont activées avec un traitement à base de tannins naturels, qui confèrent de bonnes propriétés à la fibre pour se déplacer dans un champ électrostatique. Les fibres activées sont séchées 2h dans une étuve à 60˚C, puis conditionnées à une humidité relative de 60% et à une température de 20˚C. Une toile de coton est enduite de colle acrylique à la racle, sur une épaisseur de 15/100cm. La surface est placée dans un champ de 35kV, la distance entre les deux électrodes étant de 18cm. Le flockage est effectué manuellement, durant 1 min. Puis la colle est séchée et réticulée, 10min à 130˚C suivies de 10min à 160˚C. La surface est ensuite lavée à l'eau déminéralisée à 40˚C durant 20min.

Les exemples 6 à 10 correspondent aux surfaces flockées obtenues avec les fibres décrites dans le tableau IV. Dans le cas de l'exemple 10, les fibres utilisées pour le flockage comprennent 99,5% de fibres selon l'exemple 3 et 0,5% de fibres conductrices noires R-Stat vendues par Bayer ; il s'agit d'une formule couramment utilisée par les préparateurs de surface flockée antistatique.

La couleur de la surface flockée est évaluée visuellement, O désigne une couleur écrue ou proche de l'écru tandis que X indique une coloration grise de la surface.

Les résultats obtenus pour les surfaces flockées sont donnés dans le tableau IV :

Tableau IV

| Exemples | 6 | 7 | 8 | 9 | 10 |
|---|---|---|---|---|---|
| Fibres utilisées pour le flockage | 100% ex.1 | 100% ex.2 | 100% ex.3 | 100% ex.5 | |
| Antistaticité de la surface flockée (Mahlo) | 20 | 35 | 5 | 10 | 25 |
| Couleur | ○ | ○ | ○ | ○ | X |

On observe que la surface flockée obtenue avec les fibres de l'invention présente à la fois une antistaticité au moins aussi bonne que celle observée pour des surfaces obtenues par flockage d'un mélange de fibres classiques et de fibres fortement conductrices, en supprimant la coloration grise de la surface.

Exemples 11 à 13

On prépare des granulés comportant le polyamide et un ou plusieurs additifs par extrusion en extrudeuse double vis comme précédemment. Les compositions ainsi réalisées sont données en tableau V.

TABLEAU V

| | Exemple 11 | Exemple 12 | Exemple 13 comparatif |
|---|---|---|---|
| Polyamide (% en poids) | 95 % | 90 % | 100 % |
| Additif (% en poids) | A-5 % | A - 10 % | - |

On file en fondu des fils à partir des granulés préparés. Le filage est suivi d'un étirage en reprise du fil. La température du filage est de 280°C, la vitesse du bobinoir est de 500 m/min, la vitesse d'étirage est de 611 m/min, la température du godet est de 90°C. Le fil est ensimé avec un ensimage spécifique. Le fil préparé a un titre de 68,4 dtex pour 36 filaments.

La résistance de ces fils, conditionnés dans une enceinte climatique Heraeus Votsh type HC2020 à une hygrométrie relative de 60% ou 20% et à une température de 20°C, est mesurée à l'aide d'un megaohmètre Sefelec type DM500A, entre deux points distants de 0,7cm. Les résultats obtenus sont donnés dans le tableau VI :

Tableau VI

| Exemples | 11 | 12 | 13 (comparatif) |
|---|---|---|---|
| Résistivité en Ohm.cm à RH60 | 6 10+7 | 2 10+7 | 7 10+8 |
| Résistivité en Ohm.cm à RH20 | 8 10+8 | 3 10+8 | 6 10+9 |

Les fils obtenus à partir de compositions selon l'invention se filent facilement, par comparaison à des produits de plus bas point de fusion. Ils présentent une bonne antistaticité pour une hygrométrie de 60%. De plus, les fils préparés avec l'additif gardent une bonne antistaticité même pour une hygrométrie de 20%.

## Revendications

**1.** Fils, fibres et filaments susceptibles d'être obtenus par filage d'une composition polymère thermoplastique comprenant un polyamide et au moins un composé modificateur de l'hydrophilie et/ou de l'antistaticité, **caractérisé en ce que** le composé modificateur est un polymère bloc représenté par la formule (I):

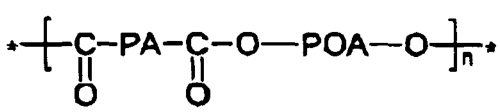

(I)

dans laquelle,

- n est un entier compris entre 3 et 50
- POA représente un bloc polyoxyde d'alkylène
- PA représente un bloc polyamide dont le motif de répétition est représenté par l'une des formules (IIa) ou (IIb):

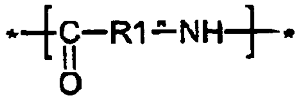 (IIa) 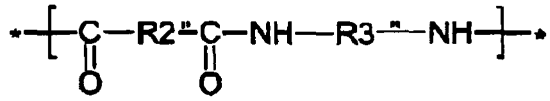 (IIb)

dans lesquelles R1, R2, R3 sont des radicaux aromatiques ou aliphatiques comprenant 4 à 36 atomes de carbone, le polymère bloc étant obtenu par réaction catalysée entre :

• Des chaînes macromoléculaires polyamides dont les fonctions terminales sont des fonctions acides carboxyliques,
• Des chaînes polyéther diols.

2. Fils, fibres, filaments selon la revendication 1 **caractérisés en ce que** le radical R1 est un radical linéaire divalent pentyle, et **en ce que** le bloc polyoxyde d'alkylène est un bloc polyoxyde d'éthylène

3. Fils, fibres, filaments selon l'une des revendications précédentes **caractérisés en ce que** la masse moléculaire moyenne d'un bloc POA est comprise entre 1000 et 3000 g/mol.

4. Fils, fibres, filaments selon l'une des revendications 1 à 3 **caractérisés en ce que** n est compris entre 10 et 15.

5. Fils, fibres, filaments selon l'une des revendications précédentes **caractérisés en ce que** la masse moléculaire moyenne d'un bloc PA est comprise entre 1000 et 3000 g/mol.

6. Fils, fibres, filaments selon la revendication 1 **caractérisés en ce que** le polymère bloc est obtenu par réaction catalysée entre:

- des chaînes polyamides dont les fonctions terminales sont des acides carboxyliques
- des chaînes polyéther diols

le catalyseur étant choisi parmi les tétraalkylorthotitanates et l'acétate de zirconyle.

7. Fils, fibres, filaments selon l'une des revendications précédentes **caractérisés en ce que** la proportion pondérale du composé modificateur de l'antistaticité et/ou de l'hydrophilie dans la composition est comprise entre 4 et 20%

8. Fils, fibres, filaments selon l'une des revendications précédentes **caractérisés en ce que** le composé modificateur de l'antistaticité et/ou de l'hydrophilie présente une température de fusion supérieure à 150°C, de préférence comprise entre 150 et 250°C

9. Fils, fibres, filaments selon l'une des revendications précédentes **caractérisés en ce qu'**elle comprend un agent matifiant.

10. Fils, fibres, filaments selon la revendication 9 **caractérisés en ce que** l'agent matifiant est à base de sulfure de zinc.

11. Fils, fibres, filaments selon la revendication 9 **caractérisés en ce que** l'agent matifiant est à base de dioxyde de titane, seul ou en association à un autre agent

12. Fils, fibres, filaments selon l'une des revendications 9 à 11 **caractérisés en ce que** la proportion pondérale en agent matifiant dans la composition est supérieure à 0,7%.

13. Fils, fibres, filaments selon l'une des revendications précédentes **caractérisés en ce que** le polyamide est choisi parmi le polyamide 6, le polyamide 66, leurs mélanges et copolymères.

14. Surfaces flockées dont les fibres flockées, en totalité ou en partie, sont des fibres selon l'une des revendications 1 à 13.

## Claims

1. Yarns, fibres and filaments capable of being obtained by spinning a thermoplastic polymer composition comprising a polyamide and at least one compound for modifying the hydrophilicity and/or the antistatic behaviour, **characterized in that** the modifying compound is a block polymer represented by formula (I):

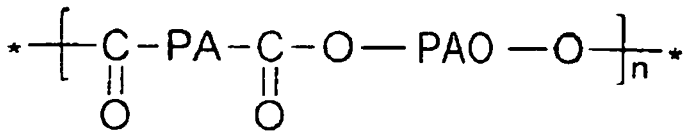

(I)

in which,

- n is an integer between 3 and 50
- PAO represents a polyalkylene oxide block
- PA represents a polyamide block, the repeat unit of which is represented by either of formulae (IIa) and (IIb):

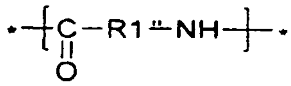 (IIa) 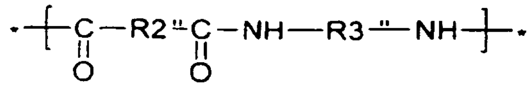 (IIb)

in which R1, R2, R3 are aromatic or aliphatic radicals comprising 4 to 36 carbon atoms, the polymer block being obtained by the catalysed reaction between:

- macromolecular polyamide chains whose terminal functional groups are carboxylic acid functional groups;
- polyether diol chains.

2. Yarns, fibres and filaments according to Claim 1, **characterized in that** the radical R1 is a pentyl divalent linear radical and **in that** the polyalkylene oxide block is a polyethylene oxide block. the polymer block is obtained by the catalysed reaction between:

   - polyamide chains whose terminal functional groups are carboxylic acids;
   - polyether diol chains,

3. Yarns, fibres and filaments according to either of the preceding claims, **characterized in that** the average molecular mass of the PAO block is between 1000 and 3000 g/mol.

4. Yarns, fibres and filaments according to one of Claims 1 to 3, **characterized in that** n is between 10 and 15.

5. Yarns, fibres and filaments according to one of the preceding claims, **characterized in that** the average molecular mass of a PA block is between 1000 and 3000 g/mol.

6. Yarns, fibres and filaments according to Claim 1, **characterized in that** the polymer block is obtained by the catalysed reaction between:

   - polyamide chains whose terminal functional groups are carboxylic acids;
   - polyether diol chains,

   the catalyst being chosen from tetraalkylorthotitanates and zirconyl acetate.

7. Yarns, fibres and filaments according to one of the preceding claims, **characterized in that** the proportion by weight of the compound for modifying the antistsatic behaviour and/or hydrophilicity in the composition is between 4 and 20%.

8. Yarns, fibres and filaments according to one of the preceding claims, **characterized in that** the compound modifying the antistatic behaviour and/or hydrophilicity has a melting point of greater than 150°C, preferably between 150 and 250°C.

9. Yarns, fibres and filaments according to one of the preceding claims, **characterized in that** it includes a delustrant.

**10.** Yarns, fibres and filaments according to Claim 9, **characterized in that** the delustrant is based on zinc sulphide.

**11.** Yarns, fibres and filaments according to Claim 9, **characterized in that** the delustrant is based on titanium dioxide, by itself of in combination with another delustrant.

**12.** Yarns, fibres and filaments according to one of Claims 9 to 11, **characterized in that** the proportion by weight of delustrant in the composition is greater than 0.7%.

**13.** Yarns, fibres and filaments according to one of the preceding claims, **characterized in that** the polyamide is chosen from nylon-6, nylon-6,6 and blends and copolymers thereof.

**14.** Flocked surfaces, the flocked fibres of which, completely or partly, are fibres according to one of Claims 1 to 13.

**Patentansprüche**

**1.** Garne, Fasern und Filamente, die durch Verspinnen einer thermoplastischen Polymerzusammensetzung erhalten werden können, die ein Polyamid und mindestens eine Modifikatorverbindung der Hydrophilie und/oder der Antistatizität umfasst, **dadurch gekennzeichnet, dass** die Modifikatorverbindung ein Blockpolymer ist, das durch die Formel I dargestellt ist:

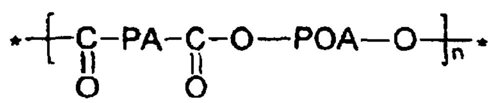

**(I)**

wobei

- n eine ganze Zahl von 3 bis 50 ist
- POA ein Blockpolyalkylenoxid darstellt
- PA ein Blockpolyamid darstellt, dessen Wiederholungseinheit durch eine der Formeln (IIA) oder (IIb) dargestellt ist:

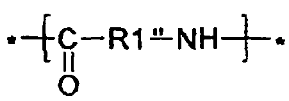 **(IIa)** 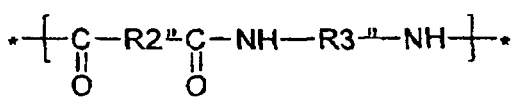 **(IIb)**

wobei R1, R2, R3 aromatische oder aliphatische Reste sind, die 4 bis 36 Kohlenstoffatome einschließen, das Blockpolymer durch katalysierte Umsetzung zwischen:

• makromolekularen Polyamidketten, deren terminale Funktionen Carbonsäurefunktionen sind.
• Polyetherdiolketten erhalten wird.

**2.** Garne, Fasern, Filamente nach Anspruch 1. **dadurch gekennzeichnet, dass** der Rest R1 ein linearer zweiwertiger Pentylrest ist und **dadurch**, dass das Blockpolyalkylenoxid ein Blockpolyethylenoxid ist.

**3.** Garne, Fasern, Filamente nach einem der vorhergehenden Ansprüche, **dadurch gekennzeichnet, dass** die durchschnittliche Molekülmasse eines Block-POA 1.000 bis 3.000 g/mol beträgt.

**4.** Garne, Fasern, Filamente nach einem der Ansprüche 1 bis 3, **dadurch gekennzeichnet, dass** n 10 bis 15 ist.

**5.** Garne, Fasern, Filamente nach einem der vorhergehenden Ansprüche, **dadurch gekennzeichnet, dass** die durchschnittliche Molekülmasse eines Block-PA 1.000 bis 3.000 g/mol beträgt.

**6.** Garne, Fasern, Filamente nach Anspruch 1. **dadurch gekennzeichnet, dass** das Blockpolymer durch katalysierte Umsetzung zwischen:

- Polyamidketten, deren terminale Funktionen Carbonsäuren sind
- Polyetherdiolketten

erhalten wird, wobei der Katalysator aus Tetraalkylorthotitanaten und Zirkonylacetat ausgewählt ist.

**7.** Garne, Fasern, Filamente nach einem der vorhergehenden Ansprüche, **dadurch gekennzeichnet, dass** der Gewichtsanteil der Modifikatorverbindung der Antistatizität und/oder der Hydrophilie in der Zusammensetzung 4 bis 20 % beträgt.

**8.** Garne, Fasern, Filamente nach einem der vorhergehenden Ansprüche, **dadurch gekennzeichnet, dass** die Modifikatorverbindung der Antistatizität und/oder der Hydrophilie eine Schmelztemperatur über 150 ˚C. vorzugsweise von 150 bis 250 ˚C besitzt.

**9.** Garne, Fasern, Filamente nach einem der vorhergehenden Ansprüche. **dadurch gekennzeichnet, dass** sie ein Mattierungsmittel einschließt.

**10.** Garne, Fasern, Filamente nach Anspruch 9, **dadurch gekennzeichnet, dass** das Mattierungsmittel auf Zinksulfidbasis ist.

**11.** Garne, Fasern, Filamente nach Anspruch 9. **dadurch gekennzeichnet, dass** das Mattierungsmittel auf Titandioxidbasis ist, allein oder in Kombination mit einem anderen Mittel.

**12.** Garne, Fasern, Filamente nach einem der Ansprüche 9 bis 11, **dadurch gekennzeichnet, dass** der Gewichtsanteil an Mattierungsmittel in der Zusammensetzung über 0.7 % beträgt.

**13.** Garne, Fasern, Filamente nach einem der vorhergehenden Ansprüche, **dadurch gekennzeichnet, dass** das Polyamid aus Polyamid 6. Polyamid 66, ihren Gemischen und Copolymeren gewählt ist.

**14.** Beflockte Oberflächen, wovon die geflockten Fasern, insgesamt oder teilweise. Fasern nach einem der Ansprüche 1 bis 13 sind.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- hydrophilic nylon for improved apparel comfort. *Textile Research Journal,* Juin 1985, 325-333